Europäisches Patentamt

(19) European Patent Office

Office européen des brevets

(11) Publication number: **0 013 760**
A1

# (12) EUROPEAN PATENT APPLICATION

(21) Application number: 79105391.1

(22) Date of filing: 28.12.79

(51) Int. Cl.³: **B 66 C 19/00,** B 63 B 27/12, B 65 G 67/00

(30) Priority: 12.01.79 IT 4761379
10.10.79 IT 2638179

(43) Date of publication of application: 06.08.80
Bulletin 80/16

(84) Designated Contracting States: AT BE CH DE FR GB LU NL SE

(71) Applicant: Gatti, Marco, Via Bonaldo Stringher 27, I-00191 Roma (IT)

(72) Inventor: Gatti, Marco, Via Bonaldo Stringher 27, I-00191 Roma (IT)

(74) Representative: Giambrocono, Alfonso, Dott. Ing. et al, Via Rosolino Pilo 19/B, I-20129 Milano (IT)

(54) Gantry apparatus for unloading dry loads from ships.

(57) To allow rapid unloading of dry loads from ships without using complicated equipment, the invention proposes an apparatus comprising a gantry crane (6) provided with means for supporting it on the normal ship hatchway guides (4, 5). The crane comprises a bucket (12) which unloads the material taken from the hold (2) into a container (23) (such as a bin or hopper) provided with a discharge port, from which the material flows to at least one conveyor belt (25) which transfers it off the ship (1).

EP 0 013 760 A1

- 1 -

Gantry apparatus for unloading dry loads from ships

The present invention relates to a device for unloading dry loads from ships.

Present systems for unloading ships conveying minerals or other bulk material can be divided into the following two large categories:
1) systems which use means forming an integral part of the ship's structure
2) systems which use means installed on land.

The first category includes self-unloading ships, which were used particularly in the past and which are preferred today only where special traffic conditions justify their use, i.e. for short passages and frequent unloading.

The drawbacks of such an unloading system are its limited utilisation, which does not justify its use on oceanic routes, i.e. for large tonnage ships, and its more difficult maintenance, which is carried out on the ship is aggravated by the salty environment to which the apparatus is more heavily exposed. Finally, the weight of such a structure, which increase with its complexity, reduces the useful load of the ship.

The system of the second category have been the subject of great development in recent years, both from the size and design aspects. In this respect, the dimensions of such systems have grown considerably with the increase in the tonnage of ships and the corresponding need to reduce unloading times to a minimum. Of particular importance in this aspect are the dock unloading bridges which can be operated at high speeds with linear movements of a bucket, the cubic capacity of which has reached dimensions which
would have been unimaginable at one time. The range on the
sea side has been particularly extended in order to make it
possible to transfer the load from ship to ship, an operation
which is becoming increasingly frequent at the present time.
All this, leading to a high moment on the support base, has
resulted in an increasingly larger weight for these bridges.

Unloading bridges weighing more than 2000 tons no longer
represent an exception. However, such gigantic constructions
are able to handle a useful load only of the order of 30 tons.

At the design level, a system for continuous unloading has
been developed, but is still in the experimental stage, which
in theory would allow higher capacities to be obtained. However, for equal performances, the structural dimensions of
a continuous unloading system are greater than those for
intermittent unloading.

The increase in the size of ships, which is also a consequence
of the increased distances covered, is however limited by
the reception port equipment, and leads to a distribution of
the load over various ports.

In particular, for the ocean conveying of coal, there is
an increase need for equipment at the reception end which
is analogous to that present at the loading terminals, which
are today designed for receiving ships of 120-150,000 tons.

The need to distribute loads of this extent over a number of
bases requires the installation, at at least one reception
point, of adequate equipment for ship transfer and for unloading/withdrawing from the stockyard, the cost of which,
including the preparation of the necessary foundations, can

0013760

- 3 -

be extremely high. Moreover, in relation to the constraints which such a work imposes, i.e. deep waters, ground which can support the stresses of the unloading bridge, and a considerable area for installing the bridge and for forming the load stockyard, the ports which can be equipped are limited. Equipment of considerable size is also very sophisticated, with the consequent inevitable need for frequent and laborious maintenance.

The object of the present invention is to develop a different category of unloading systems, particularly interesting for ship transfer operations, which gives high performance without the drawbacks of the two previously described categories.

According to the invention, the apparatus used for the unloading is positioned directly on the ship at the point of unloading, namely on that support base common to all ships which is represented by the guides on which the hatchway cover slides. In this respect, there is no obstacle present between these guides, and they are designed to support large loads in that in addition to the actual weight of the cover, they must also support any stresses which during navigation can derive from the sea waves which strike the cover.

The unloading apparatus according to the invention is constituted by a gantry crane which can be disposed on, and is movable along, the guides on which the ship hatchway covers slide, the apparatus raising the material from the hold by means of a bucket which discharges it into at least one hopper disposed to one side of the crane, and from which the material flows to at least one conveyor belt which transfers it off the ship.

The stresses therefore arise within the support surface for the structure, so annulling the moment and therefore, for equal performances, reducing the weight considerably relative to the weight of land apparatus. Whereas for a modern dock unloading bridge with an arm not suitable for ship transfer the weight useful load ratio can even reach 50:1, and for a similar bridge suitable for ship transfer the same ratio can reach 100:1, in the case of the apparatus according to the invention this ratio can be 3:1.

According to the invention, the apparatus is positioned on the ship at the unloading point for the time strictly necessary for unloading. The apparatus carries out the unloading by means of linear movements, which give maximum performance.

It must be considered that the operation of transfer between ships will be of increasing importance as it enables large tonnage ships to be used for long oceanic voyages, in conjuction with small tonnage ships for distributing the product.

In order to enable the apparatus to be used on any ship independently of the hatchway size and the type of hatchway cover, the gantry crane is constructed with a variable distance between centres, and the conveyor belt for transfer off the ship is positionable relative to the crane. For example, if the hatchway cover slides along the lenght of the ship, the gantry crane will be positioned across its width, and the conveyor belt or belts will be in line with or parallel to the crane. If the hatchway cover slides along the width of the ship, then the gantry crane will be positioned along its length and the conveyor belt of belts will be perpendicular to it.

- 5 -

Various support systems can be used for supporting and sliding the gantry crane on the hatchway guides, such as shoes, wheels, or a combination of systems, such as shoes for support during the unloading, and wheels for movement.

The low weight of the gantry enables it to be positioned by using suitable lofting means of limited characteristics, as normally available in ports of a certain size. As power requirements are small, the electrical supply presents no special difficulties, and either fixed or mobile port equipment can be used, or the actual electrical supply means on board the ship.

In attaining a performance equal to that of dock unloading bridges, the particularly small distance involved in the cycle enables low speeds to be used, together with buckets of smaller size, to the considerable advantage of the reliability of the apparatus (maintenance and repair work is drastically reduced).

All this, accompanied by perfect operational visibility, means that the actual performances approaches the theoretical performance. The use of a small bucket also reduces to a minimum any possible damage to the ship hold.

The short distance travelled by the bucket and the small free falling height of the material from the bucket to the hopper reduces to a minimum the possibility of pollution, a problem which is particularly felt at the present time in the more developed countries.

Moreover, because of the low weight, extremely small overall size and the particularly low cost in comparison with that of analogous dock unloading bridges, consideration can be given to the use of a number of gantry cranes for such unloading operation disposed over different holds. In this case, the total unloading rate can be particularly high. Although the facility for ship-to-ship transfer which the gantry crane possesses, simultaneously with or as an alternative to unloading on to land, represents one of the most important advantages of such an apparatus, in the case of unloading on to land, a better utilisation of the immediate space is obtained as it is free from obstruction by the legs of the unloading bridges.

In the case of an already existing terminal, the gantry crane can constitute an additional means to be reserved essentially for ship-to-ship transfer operations, for which it is certainly more useful than the unloading bucket of a large ship which, because of its type of movement and its size, cannot be properly utilised, especially for loading lighters.

In the case of a terminal still to be designed, the gantry crane can represent a new aspect which is particularly attractive in terms of cost and construction time, either alone or in combination with normal unloading bridges, which would then be of substantially small size, as they would leave the ship-to-ship transfer operations to the gantry crane.

In port localities without suitable equipment for receiving large tonnage ships (in particular all the ports of the third world), but which have adequate water depths, it represents the ideal method for lightening large ships, thus enabling such ships to terminate their voyage at a second reception point which, because of the limitations of water depth, could not otherwise receive them. In this respect, the gantry crane constitutes the most valid system for a "lightening base" as it requires only adequate water depth and a reliable mooring.

The maintenance and/or repair work, which is particularly low because of the simplicity of the apparatus, represents a very important advantage particularly for third world locations. It would also be possible for ship-to-ship transfer to take place outside the normal port docks, for example by mooring to dykes outside the harbour, to a system of floating buoys, or to a structure anchored offshore and connected to land by a conveyor belt, of the same type as used in main loading terminals. In this case, it is necessary only to position the gantry crane on the ship by using a suitable pontoon.

The invention will be more apparent from the detailed description of a preferred embodiment given hereinafter by way of non-limiting example with reference to the accompanying drawing in which:

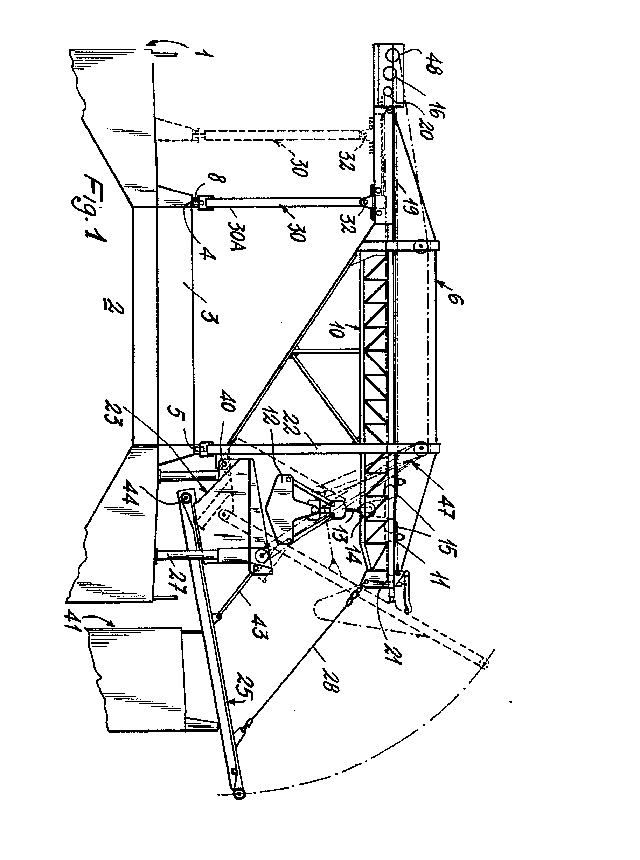

Figure 1 is a diagrammatic side elevation of the apparatus according to the invention in the unloading position for a ship's hold;

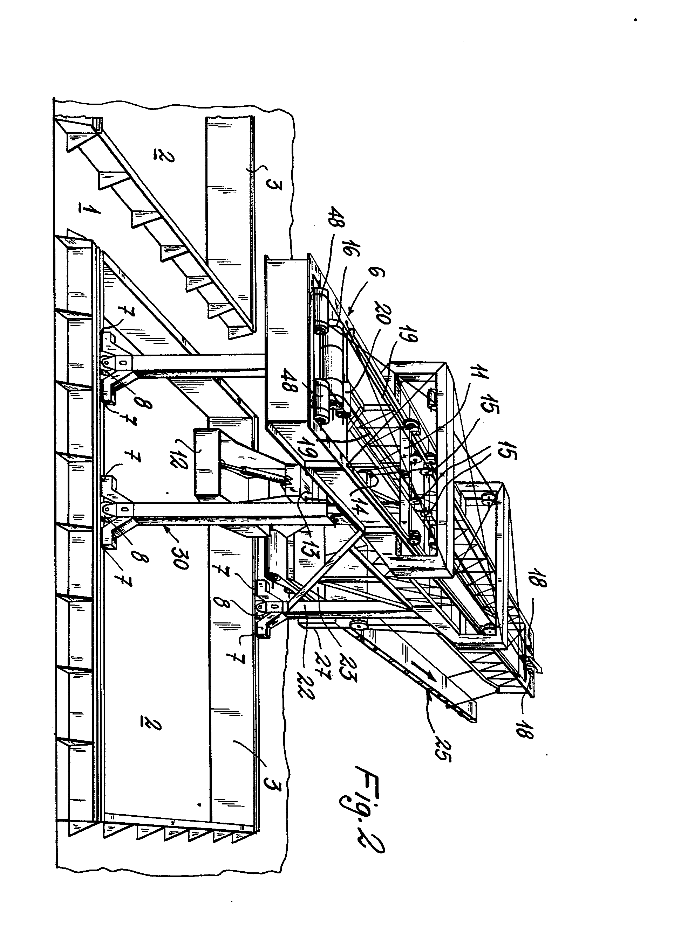

Figure 2 is a perspective diagrammatic view of Figure 1, with certain parts omitted for clarity; and

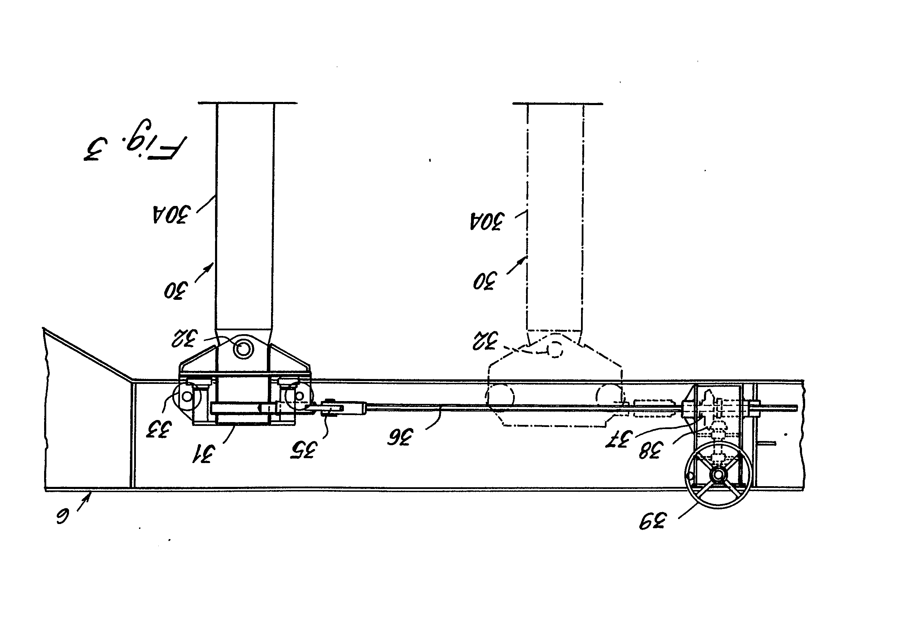

Figure 3 is a longitudinal section, to a greatly enlarged scale, through the mechanism for adjusting the distance between the centres of the apparatus in order to adapt it to hatchways of different width.

With reference to the figures, the reference numeral 1 indicates overall a ship for transporting for example coal which is contained in the holds 2 provided with hatchways 3 which can be closed by the normal covers, not shown, which slide for example in the longitudinal direction of the ship

- 8 -

along guides 4, 5 which bound each hatchway on both guides.

When a particular bold 2 is to be unloaded, a gantry crane indicated overall by 6 is deposited on the guides 4 and 5 of the relative hatchway 3, using suitable dock or floating lifting means. The gantry crane can rest and move on the guides 4, 5 by way of simple shoes, or, if movement along the guides is required in order to make unloading more efficient, then by way of wheels, or alternatively by a combination of shoes and wheels as shown, these means being indicated by 7 and 8.

The gantry crane 6 comprises a horizontal beam 10 with the usual longitudinal runways for a carriage 11 which serves for horiziontal moving a bucket 12, for example of the known hydraulic opening and closure type, which is supported by portions of chain 13 by the supports of a pair of coaxial wheels 14 forming part of the mechanism for raising and lowering the bucket 12, this mechanism comprising parallel cables 19 passing over said wheels 14 and over wheels 15 on the carriage 11. These cables are wound and unwould by drums 16 driven by a geared motor, not shown, their free and being fixed to the right hand of the beam 10, for example at the points 18. The carriage 11 is driven by way of a normal transmission comprising a geared motor (not shown) driving a drum 20 carried by the beam 10 and operating cables, the ends of which are fixed to the carriage 11 and then pass around wheels 21.

One of the sides or uprights of the gantry crane 6 is rigid with the beam 10, this side being indicated on the drawing by 22, and, together with the heam, supporting by way of hinges 40 a hopper 23, into which the bucket 12 discharges the material taken from the hold 2. The hopper 23 discharges

- 9 -

its material on to at least one conveyor belt 25 which extends outside the ship and on to the dock, or (as shown) on to the hatchway of another ship 41 standing to its side. The conveyor belt 25 shown here is supported on board by supports 27, possibly adjustable in height, and is joined to the beam 10 by ties 28, possibly of adjustable length.

In the embodiment shown, the conveyor belt 25 is also joined by rods 43 (possibly of adjustable lenght) to the hopper 23, to which it is hinged at its end 44. In addition, the assembly formed by the hopper 23 and conveyor belt 25 can be rotated (about the hinge 40) from the position shown by the continuous line to the position shown by the deshed line by means of a tackle system 47 operated by drums 48 operationally connected to a geared motor, not shown, supported by the beam 10.

Besides being able to be adjusted in inclination, the conveyor belt 25 can also be swivelled laterally to an adjustable extent, for which purpose the conveyor belt need only be joined to the supports 37 and hopper 23, for example by vertically adjustable circular guides.

Although the hopper 23 is connected to the gantry crane 6, it rests on the deck of the ship by way of said supports 27.

The gantry crane 6 also obviously comprises the other side or upright 30, which can be moved relative to the upright 22 in order to adapt the distance between the centres of the gantry crane to the distance between the guides 5,6 of the hatchway, a distance which can be different from ship to ship. The side 30 comprises an upper cross member 31, to which the legs 30A, which rest on the other hatchway guide by way of the means 7 and 8, are hinged by pins 32. The cross member 31 forms part of a carriage 33 guided by horizontal and

- 10 -

vertical wheels along an end portion of the beam 6. The carriage 33 is connected by an articulalted joint 35 to a screw 36 which extends through an axially fixed bush 38, and to which a bevel gear 38 is rigidly fixed. Rotational movement is transmitted from a hand wheel 39 to said bevel gear by a bevel gear transmission.

Instead of a single conveyor belt 25 which is adjustable in height and inclination and the extent to which it can be swivelled laterally, two conveyor belts in cascade can be provided without leaving the spirit of the invention, one of these being fixed and reaching the material from the hopper, to discharge it on to the other, which can be constructed, in accordance with the known art in the conveyor belt field, such as to be adjustable in height, inclination and lateral swivel movement. This second conveyor belt can be either connected to be fixed conveyor belt or not, and possibly connected to the structure of the gantry crane.

- 11 -

Claims:

1. An apparatus for unloading dry loads from ships, comprising a gantry crane with means for supporting it on the guides for the ship hatchway covers, said crane possessing or being associated with a bucket which discharges the withdrawn material into at least one container (such as a hopper), from which the material flows to at least one conveyor belt which transfers it off the ship.

2. An apparatus as claimed in claim 1, characterized in that the means for support on the cover guides enable at least the gantry crane to be moved along the guides.

3. An apparatus as claimed in the preceding claims, characterized in that the hopper is connected to the gantry crane.

4. An apparatus as claimed in the preceding claims, characterized in that the conveyor belt is independent of the hopper and of the gantry crane.

5. An apparatus as claimed in or more of claimes 1 to 4, characterized in that the conveyor belt is connected to the gantry crane.

6. An apparatus as claimed in one or more of the preceding claims, characterized in that the sides of the gantry crane can be moved relative to the other in order to adapt the distance between the centres of the crane to the distance between the centres of the guides on which it is disposed.

7. An apparatus as claimed in claim 5 or 6, characterized in that the conveyor belt can be swivelled laterally.

0013760

- 12 -

8. An apparatus as claimed in claim 5 or 6, characterized in that the conveyor belt is adjustable in inclination and/ or in height.

9. An apparatus as claimed in claim 1, comprising two conveyor belts in cascade, one being fixed and connected to the container (hopper) and one being adjustable in inclination and horizontality, and either connected or not connected to the fixed conveyor belts, and possibly to the gantry crane.

10. A system for unloading or transferring dry loads from the holds of a ship, consisting of disposing a removable gantry crane on the guides for the hatchway covers such that it straddles the hatchway of a hold, withdrawing the material from the hold by means of a bucket associated with said gantry crane, discharging the contents of the bucket into at least one container (such as a hopper) removably disposed on the ship, and transferring the material off the ship by means of at least one conveyor belt.

Fig.1

0013760

Fig.2

Fig. 3

0013760

| Category | Citation of document with indication, where appropriate, of relevant passages | Relevant to claim |
|---|---|---|
| | DE – A – 1 506 773 (ORENSTEIN-KOPPEL)  * claim 1 * | 1,10 |
| | DE – U1 – 7 816 761 (INTERPLAN)  * claim 1 * | 1,10 |
| | DE – U – 1 732 486 (J. POHLIG AG)  * claim 1 * | 1,10 |
| | GB – A – 1 248 991 (FLEXIBLE CONVEYOR)  * claim 1; fig. 1 * | 1,6, 10 |
| A | FR – A – 505 146 (E.FEUILLETTE)  * fig. 1 * | 1 |
| A | GB – A – 952 840 (ALGONQUIN SHIPPING & TRADING LTD. et al.)  * fig. 1, 8 * | 1 |
| A | US – A – 1 681 742 (D.S. MUNN)  * fig. 1 * | 1 |

**DOCUMENTS CONSIDERED TO BE RELEVANT**

**CLASSIFICATION OF THE APPLICATION (Int. Cl.)**

B 66 C 19/00
B 63 B 27/12
B 65 G 67/00

**TECHNICAL FIELDS SEARCHED (Int.Cl.)**

B 63 B 27/00
B 65 G 67/00
B 66 C 5/00
B 66 C 19/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X | The present search report has been drawn up for all claims

| Place of search | Date of completion of the search | Examiner |
|---|---|---|
| Berlin | 20-03-1980 | KANAL |

EPO Form 1503.1 06.78